(19) Europäisches Patentamt
European Patent Office
Office européen des brevets

(11) **EP 3 143 429 B1**

(12) **FASCICULE DE BREVET EUROPEEN**

(45) Date de publication et mention
de la délivrance du brevet:
**09.09.2020 Bulletin 2020/37**

(21) Numéro de dépôt: **15727703.9**

(22) Date de dépôt: **18.05.2015**

(51) Int Cl.:
*G01T 1/164* (2006.01)    *G01T 1/20* (2006.01)

(86) Numéro de dépôt international:
**PCT/FR2015/051293**

(87) Numéro de publication internationale:
**WO 2015/173530 (19.11.2015 Gazette 2015/46)**

(54) **PROCÉDÉ POUR AMÉLIORER LA RÉSOLUTION EN ÉNERGIE DE DÉTECTEURS DE RAYONS GAMMA À SCINTILLATION; SYSTÈME, COMPOSANT ET APPLICATION ASSOCIÉS**

VERFAHREN ZUR VERBESSERUNG DER ENERGIEAUFLÖSUNG VON GAMMASTRAHLENSZINTILLATIONSDETEKTOREN, ENTSPRECHENDES SYSTEM, KOMPONENTE UND ANWENDUNG

METHOD FOR IMPROVING THE ENERGY RESOLUTION OF GAMMA RAY SCINTILLATION DETECTORS; ASSOCIATED SYSTEM, COMPONENT AND APPLICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2014 FR 1454417**

(43) Date de publication de la demande:
**22.03.2017 Bulletin 2017/12**

(73) Titulaire: **Iltis, Alain**
**10000 Troyes (FR)**

(72) Inventeur: **SNOUSSI, Hichem**
**10450 Breviandes (FR)**

(74) Mandataire: **Debay, Damien et al**
**Debay IP**
**126 Résidence Elysée 2**
**18, avenue de la Jonchère**
**78170 La Celle-Saint-Cloud (FR)**

(56) Documents cités:
WO-A2-02/082122    CA-A1- 2 740 456
FR-A1- 2 997 766    FR-A2- 2 626 679
US-A- 5 391 878

- **STEFAN SEIFERT ET AL: "Paper;Monolithic LaBr3:Ce crystals on silicon photomultiplier arrays for time-of-flight positron emission tomography;Monolithic LaBr3:Ce crystals on silicon photomultiplier arrays for time-of-flight positron emission tomography", PHYSICS IN MEDICINE AND BIOLOGY, INSTITUTE OF PHYSICS PUBLISHING, BRISTOL GB, vol. 57, no. 8, 29 mars 2012 (2012-03-29), pages 2219-2233, XP020220785, ISSN: 0031-9155, DOI: 10.1088/0031-9155/57/8/2219**
- **DELLACASA G ET AL: "A silicon pixel readout ASIC with 100 ps time resolution for the NA62 experiment", JOURNAL OF INSTRUMENTATION, INSTITUTE OF PHYSICS PUBLISHING, BRISTOL, GB, vol. 6, no. 1, 17 January 2011 (2011-01-17), page C01087, XP020203543, ISSN: 1748-0221, DOI: 10.1088/1748-0221/6/01/C01087**

**Description**

**DOMAINE TECHNIQUE DE L'INVENTION**

L'invention se rapporte à la mesure de l'énergie d'une source de rayons gamma via un processus de scintillation. Plus particulièrement l'invention concerne un procédé pour améliorer la résolution en énergie de détecteurs de rayons gamma à base de scintillateurs. L'invention concerne également l'ensemble des applications actuelles des détecteurs à scintillation dans la mesure où elles font appel à une mesure de l'énergie du rayonnement telles que l'imagerie médicale, la spectroscopie gamma, la physique nucléaire.

A l'heure actuelle, la plupart des applications liées aux cristaux scintillants cherchent à mesurer l'énergie d'un rayon gamma incident, afin soit de constituer un spectre du rayonnement incident et d'y détecter des raies caractéristiques, (par exemple dans l'analyse par activation neutronique..) soit de vérifier que le rayonnement détecté est bien le signal que l'on cherche et non du bruit de fond (imagerie nucléaire: PET, SPECT...). Pour l'ensemble de ces applications la connaissance précise de l'énergie du photon gamma incident est un des points importants de la performance du détecteur.

**ETAT DE LA TECHNIQUE ANTERIEURE**

Dans la technique actuelle, pour mesurer l'énergie d'un photon gamma, on mesure le nombre de photons visibles émis lors d'une interaction. En effet il existe une relation entre l'énergie d'un photon gamma incident et le nombre de photons visibles émis par scintillation propre à chaque type de cristal scintillant. Selon le type de cristal choisi, cette relation est plus ou moins linéaire. Les meilleurs scintillateurs en termes de résolution en énergie sont aujourd'hui les halogénures de lanthane pour lesquels la linéarité est forte pour des énergies > 100 KeV. La précision sur la mesure de l'énergie s'accroît alors avec le nombre de photons collectés et donc l'énergie du photon incident.

Le document CA2740456 divulgue un procédé d'amélioration de la résolution en énergie d'un détecteur de rayonnement gamma comprenant un scintillateur monolithique et un photodétecteur segmenté, un système de détection, un composant micro-électronique et déterminer le nombre de photons dans un disque ou une autre forme composé de plusieurs éléments photodetecteurs.

Cependant aujourd'hui pour un rayonnement d'énergie donnée, la fluctuation du nombre de photons effectivement détectés est forte du fait de plusieurs effets physiques (profondeur d'interaction, pile up, collection variables des photons selon la géométrie, ...). Il faut donc accumuler plusieurs détections de photons gamma et faire une statistique. La mesure de l'énergie d'un seul photon par les spectromètres actuelle est peu précise.

Dans les configurations actuelles et connues, le cristal scintillant qui peut avoir diverses géométries selon l'application 'plaques, barreau, cylindre...possède une face de sortie sur laquelle on collecte les photons émis par scintillation. Ces photons sont détectés par un photo-détecteur (Photo multiplicateur, Si-PMT...) pendant une durée qui dépend des caractéristiques d'émission du scintillateur. Typiquement on intègre les photons émis sur une durée égale à 2 à 3 fois au moins le temps de déclin (decay time) $\tau$ (période de décroissance de l'émission lumineuse du scintillateur).

La solution actuelle pose plusieurs problèmes : premièrement, pour avoir une bonne statistique de comptage de photons, il faut intégrer le rayonnement émis par chaque évènement sur une durée assez longue. Si, pendant la cette durée, une autre interaction intervient, le signal est perturbé. A cause de l'effet pile-up ce qui dégrade la précision de la mesure de l'énergie.

Le deuxième problème consiste en ce que le nombre de photons collectés dépend de la géométrie du cristal. En effet, certains photons sont perdus lors des réflexions sur des interfaces du cristal. Le nombre de photons effectivement collectés varie en outre en fonction de la profondeur de l'interaction dans le cristal. Le résultat optimum en termes de résolution énergétique est souvent mesuré pour un cylindre. Les résolutions énergétiques obtenues pour des plaques (SPECT) ou des pixels (PET) sont dégradés par rapport à cet optimum, souvent d'un facteur 1,5 à 2 ou plus.

Par ailleurs, ce type de détecteur ne permet pas une mesure très précise du moment de l'interaction à cause de problème de la profondeur de l'interaction entre autres.

Du fait de ces limitations, on ne détecte pas l'énergie d'un photon gamma individuel. On intègre un grand nombre d'événements individuels et on constitue un graphe montrant le nombre d'événements en fonction de leur énergie. Les raies gamma caractéristiques (i.e. 511 KeV) apparaissent comme un pic sur ce graphe dont la largeur définit la résolution en énergie du détecteur.

L'objet de l'invention est donc de proposer une solution technique qui permette:

- d'améliorer la résolution en énergie en la ramenant à une valeur proche de son maximum théorique donné par la relation nombre de photons émis/Energie photon.
- d'obtenir une valeur de la résolution en énergie qui ne soit pas dépendante de la géométrie du détecteur.
- de diminuer le problème de pile-up, la plupart des événements pouvant être mesurés individuellement.

- de permettre d'obtenir une estimation de l'énergie de chaque événement individuel avec une incertitude inférieure à 2 fois la résolution en énergie théorique du scintillateur.
- de déterminer de manière très précise l'instant de l'interaction.
- de pouvoir être adapté sur des cristaux existants par un changement d'électronique.

Par ailleurs l'invention décrit également deux moyens d'améliorer le fonctionnement d'un imageur temporel tel que décrit dans la demande PCT/FR2013/052672.

## EXPOSE DE L'INVENTION

L'invention vise à proposer un procédé d'amélioration de la résolution en énergie d'un détecteur de rayonnement gamma selon la revendication 1.

De préférence, on compte les photons à l'intérieur du disque pendant une durée égale à environ 2 à 3 fois le temps de déclin (decay time) dudit scintillateur afin de réduire l'incertitude sur la mesure de chaque photon gamma par rapport à une méthode conventionnelle.
On entend par temps de transfert (Tc), le temps caractéristique de propagation de la lumière dans un scintillateur. Pour un scintillateur d'indice n et d'épaisseur H. Tc = H / (c/n). Le decay time $\tau$ est défini comme le temps de décroissance ou de déclin du scintillateur. Si $N_0$ est le nombre total de photons émis par ce scintillateur, le nombre de photons émis à l'instant t suit la loi N = $N_0$ exp (-t/$\tau$).

Particulièrement, on estime la position Z de l'interaction en fonction du diamètre du disque des photons non diffusés, ladite position Z étant la profondeur de ladite interaction.

Par « instant proche », on entend un décalage temporel entre les impacts de deux photons gamma, entre le temps de déclin ($\tau$) et une nanoseconde.

L'invention concerne encore un système de détection de rayonnement gamma selon la revendication 4. Le système pour la mise en œuvre du procédé ci-dessus comprenant un cristal scintillateur doté d'une face d'entrée et d'une face de sortie polie et couplée par un joint optique d'indice inférieur à 1,5 à un réseau de photo-détecteurs segmentés, lesdits photo-détecteurs étant lus par un composant micro-électronique, caractérisé en ce que le système est apte à mesurer le temps d'arrivée des premiers photons pendant une durée d'environ 2 à 6 fois d'un temps de transfert (Tc), à mesurer le nombre et à déterminer la localisation desdits premiers photons, à déterminer le diamètre et la position d'un disque à l'intérieur duquel est disposé un ensemble de photons non diffusés, le diamètre maximum dudit disque étant proportionnel à l'épaisseur dudit cristal scintillateur , et en ce qu'il est apte à compter le nombre de photons détectés pendant une durée d'environ 2 à 3 fois un temps de déclin ($\tau$) dudit scintillateur pour chaque pixel afin de mesurer l'énergie d'un seul photon gamma avec une précision supérieure à deux fois la résolution théorique du cristal scintillateur pour une énergie donnée..

Le temps d'arrivée des photons et le comptage pendant la période $T_i$ servent à déterminer la position des photons non diffusés. L'intégration pendant la période $T_d$ sert à mesurer l'énergie du photon.

Selon l'invention, le composant micro-électronique de lecture est soit intégré dans un photo-détecteur de type Si-PM digital, soit sous forme d'un composant séparé de type ASIC dans le cas d'un Si-PM Analogique.

En outre, le cristal scintillateur présente des géométries sous forme de plaque, cylindre ou barreau.

Par ailleurs, le cristal scintillateur est un halogénure de lanthane ou un silicate de lutétium pour un rayonnement d'énergie supérieure à 100 KeV.

En outre, le cristal scintillateur est d'un type quelconque lorsque les photons à détecter ont une énergie supérieure à 1MeV.

Avantageusement, le cristal scintillateur est couplé sur la face d'entrée et sur la face de sortie à un réseau de photo-détecteurs segmentés afin d'augmenter la précision de la mesure de la résolution en énergie.

Le composant micro-électronique concerne en outre un composant du type ASIC mixte utilisé pour la lecture d'un photo-détecteur du système ci-dessus. Ledit composant comprend une partie analogique apte à mesurer un événement avec une précision temporelle de l'ordre de 100ps et une partie digitale. Ce composant étant apte à mesurer le temps d'arrivée des premiers photons, à compter pendant une période Ti dite temps d'intégration équivalant à 2 à 6 fois d'un temps de transfert (Tc) le nombre de photons détectés pour un pixel, et à intégrer le nombre de photons détectés pendant une période Td de l'ordre de 2 à 3 fois le temps de déclin (T) du scintillateur.

Avantageusement ce composant peut également être apte à envoyer un signal temporel lorsque la charge des photons qui ont frappés un pixel du détecteur, pendant le temps d'intégration Ti, dépasse un seuil prédéfini.

Le cristal scintillateur de l'invention concerne en outre un cristal scintillateur sous forme de plaque monolithique doté de faces latérales et une face d'entrée pour mesurer la distribution de lumière dans une application PET ;lesdites faces latérales et la face d'entrée sont d'abord traitées de manière à éviter une réflexion par saut d'indice puis recouvertes d'un absorbant noir, afin de supprimer la réflexion sur lesdites faces.

Le cristal scintillateur de l'invention concerne en outre un cristal scintillateur sous forme de plaque monolithique doté de faces latérales et d'une face d'entrée pour mesurer la distribution de lumière d'un événement de scintillation à 511 KeV ; lesdites faces latérales et la face d'entrée sont recouvertes d'une résine d'indice n>1,7 ; ladite résine est chargée de particules absorbantes, afin de supprimer la réflexion sur lesdites faces.

L'invention concerne encore l'utilisation du système de détection selon la revendication 12.

## BREVE DESCRIPTION DES FIGURES

D'autres caractéristiques, détails et avantages de l'invention ressortiront à la lecture de la description qui suit, en référence aux figures annexées, qui illustrent :

- La figure 1, le principe d'un photon gamma qui subit un effet photo-électrique dans un cristal scintillant ;
- La figure 2A représente une cartographie des photons détectés par les Si-PMT pour un rayonnement de 511 KeV dans le cas d'un événement de scintillation ayant lieu avec Z = 5 mm et pour un temps d'intégration de Ti = 700 ps ; et
- La figure 2B représente le même événement pour un temps d'intégration de Ti = 2900 ps .

## DESCRIPTION DETAILLEE

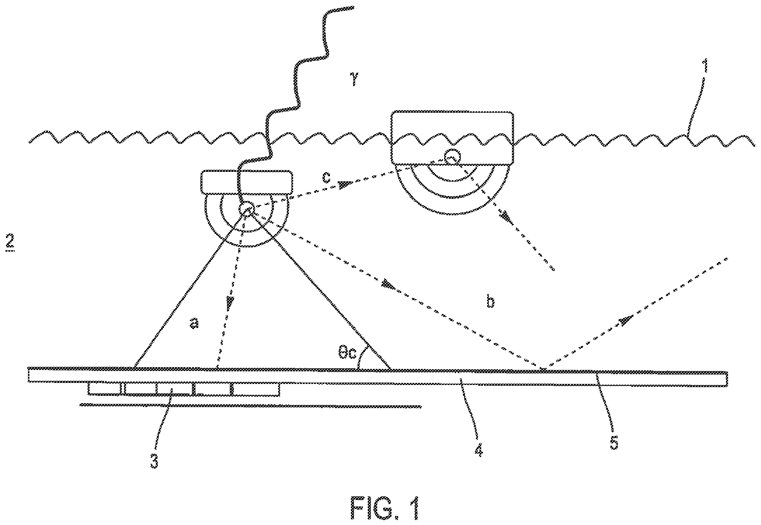

En référence à la figure 1, le détecteur est composé des éléments suivants : 1) face d'entrée ou face supérieure rugueuse et diffusante du cristal : Z=0 ; 2) Cristal scintillant ($LaBr_3$ :Ce); 3) Photo-détecteur segmenté ; 4) Joint optique 5) Face de sortie polie du cristal. (Z =30 pour les exemples) voir la figure 1.

La figure 1 montre les trois types de photons émis à savoir : a) les photons non diffusés ; b) les photons réfléchis sur la face de sortie ; c) les photons diffusés sur la face d'entrée.

La présente invention permet de différencier par leur répartition spatiale et temporelle les photons non diffusés qui cheminent en ligne droite depuis le point d'interaction et ceux qui ont subi au moins une diffusion ainsi que l'enseigne la demande internationale n° PCT/FR2013/052672, du même déposant. Par contre ici l'information sur des nombres de photons non diffusés est utilisée pour une mesure d'énergie de l'interaction et non pour une mesure spatiale ou temporelle. Seuls sont considérés pour la mesure de l'énergie de l'interaction les photons non diffusés.

Les photons non diffusés sont répartis dans un cône dont le sommet est le lieu de l'interaction (X,Y,Z,T) et dont l'angle d'ouverture est l'angle de réflexion totale sur la face de sortie 5.

A cette fin on utilise un cristal 2 d'indice $n_c$ dont la face de sortie 5 est polie et couplée via un joint optique 4 d'indice $n_g$ à un photo-détecteur segmenté 3, de préférence un Si-PMT couplé à une électronique de lecture rapide, de préférence de type ASIC mixte. Les données de sortie de cette électronique sont une information temporelle (temps d'arrivée des premiers photons UV sur chaque pixel), le cas échéant une intégration du nombre de photons sur chaque pixel pendant un temps donné Ti inférieur à 2ns, et une intégration du nombre de photons détecté sur chaque pixel sur une durée (longue) supérieure à 50 ns.

Pour chaque événement, l'information temporelle et la distribution des premiers photons détectés permettent d'estimer la position et le diamètre du disque qui contient tous les photons non diffusés, ainsi que l'enseigne la demande internationale n° PCT/FR2013/052672. Par la suite, on compte le nombre de photons détectés uniquement dans cette zone (dans le disque) sur une durée qui dépend des caractéristiques d'émission du scintillateur, typiquement 2 à 3 fois le temps de déclin (decay time) $\tau$, afin d'obtenir un nombre d'événements adéquats.

Pour une interaction (X, Y, Z, T), le calcul selon le procédé objet de la présente invention s'effectue de la manière suivante: on détecte d'abord un premier photon (x1, y1, t1) et on mesure précisément son temps d'arrivée (trigger). On compte ensuite les coordonnées (xn, yn, tn) des n photons suivants pendant une durée Ti égale à 2 à 6 fois le temps de transfert (Tc). La durée du temps d'intégration optimum dépend légèrement de la géométrie du scintillateur (plaque, cylindre...). Ce temps optimum peut être trouvé par simulation pour une géométrie donnée. A partir de la localisation des n premiers photons, on estime le diamètre de la tâche des photons non diffusés détectés ainsi que la position de l'interaction X, Y, selon les enseignements de la demande internationale n° PCT/FR2013/052672. Le diamètre de cette tâche (ou disque) permet d'estimer la position Z de l'interaction dans le cristal scintillateur 2 et donc d'estimer précisément l'instant T de l'interaction. On compte ensuite pour une durée beaucoup plus longue, idéalement deux à trois fois le temps de décroissance $\tau$ (decay time) du scintillateur (par exemple supérieure à 50 ns pour LaBr3) le nombre de photons qui sont détectés sur cette tâche (ou disque) de photons non diffusés. L'objectif est ici d'obtenir plus de 50% des photons non diffusés émis par l'interaction. Ledit nombre de photons non diffusés est proportionnel à l'énergie du photon gamma et est indépendant de la géométrie du cristal scintillateur ; il est peu affecté par le pile-up et permet donc de calculer l'énergie du photon gamma avec une erreur inférieure à celle obtenue selon l'art antérieur.

Dans les photo-détecteurs actuels, la détection des photons est sujette à des effets de seuil. Si on veut sortir du bruit de fond des détecteurs (dark counts) il est nécessaire de détecter 1,5 à 2 photo-électrons. Le temps d'intégration Ti étant bref, typiquement inférieur à 2 ns, le nombre de photons à détecter pendant Ti peut être inférieur au seuil pour les pixels périphériques. Le nombre de photons émis par interaction dans le secteur angulaire des photons non diffusés est constant. La densité de photons/pixels dépend du diamètre du disque. Le diamètre maximum du disque dépend de l'épaisseur du cristal. On peut donc jouer sur la densité de photons/pixels en jouant sur l'épaisseur du cristal. Ainsi, plus le détecteur sera finement segmenté, plus il pourra être avantageux d'utiliser des cristaux peu épais.

Par ailleurs le temps d'intégration Ti (inférieur à 2 ns) étant bref vis-à-vis des possibilités des meilleures électroniques actuelles, il est avantageux de chercher des moyens permettant de compter plus longtemps les photons. Le temps d'intégration est donné par le temps au bout duquel le nombre des photons détectés hors du disque des photons non diffusés passe un certain seuil (par exemple 90%). Le passage de ce seuil dépend essentiellement du nombre de photons diffusés sur la face d'entrée 1 du cristal, ou sur les faces latérales pour les pixels situés à moins d'une épaisseur de cristal des bords. Etant donné que pour un imageur temporel, on peut n'utiliser pour mesurer X, Y, Z, T, E que les photons non diffusés, il peut être avantageux de supprimer tous les autres photons.

Une manière connue de réaliser ceci peut être de peindre les faces latérales et la face d'entrée 1 en noir afin d'absorber tous les photons qui sortent du cristal. Cependant étant donné que l'indice de la peinture (typiquement 1,5) est inférieur à l'indice du cristal 1,8 à 1,9, une majorité des photons sont réfléchis par le saut d'indice et reviennent perturber le signal. Une manière plus avantageuse de réaliser l'invention est donc soit de trouver un produit noir d'indice proche de celui du scintillateur, soit de réaliser un traitement anti-reflet par tout moyen connu sur les faces latérales et la face d'entrée 1 du cristal 2 et d'appliquer un dépôt noir absorbant sur ce traitement anti-reflet.

Une autre manière de réaliser ce résultat peut être de déposer sur les faces non utilisées pour la détection du cristal 2 une résine d'indice 'n' élevé (n supérieur à 1,5) de préférence n supérieur à 1,7, chargée en particules absorbantes.

Ce traitement présente les avantages suivants : En diminuant fortement le nombre de photons détectés hors du cône de lumière des photons non diffusés, on augmente le temps pendant lequel on peut compter les premiers photons pour définir la position du cercle

Ce système permet également de limiter fortement les effets de bord et donc d'exploiter l'intégralité du détecteur pour l'imagerie.

Ce traitement anti-reflet peut être réalisé par couches d'interférences, cristaux photoniques ou adaptation progressive d'indice obtenue par nanostructuration telle que divulgué dans la demande de brevet européen n° 4305365.0 déposée le 13 mars 2014 « *Structuration pour l'optimisation de la collection de photons dans les cristaux scintillateurs et solutions technologiques associées* ».

Le mode de calcul selon l'invention est indépendant de la géométrie du cristal à partir du moment où il est possible de reconnaitre correctement la forme de la tâche des photons non diffusés et où l'on corrige la durée d'intégration Ti à partir de la valeur de Tc. La valeur optimum de Ti dépend en effet de Tc et de la géométrie du cristal. Par conséquent, le cristal scintillateur peut être de géométrie différente sous forme de plaque, cylindre, barreau etc....

Si on considère la résolution théorique $E_{th}$ d'un scintillateur, liée à la collection de tous les photons, le système selon l'invention permet pour un événement unique, de mesurer l'énergie de l'événement avec une résolution en énergie inférieure à deux fois la résolution théorique du scintillateur.

De plus ce type de traitement du signal peut être effectué dans tous les cas où le scintillateur a émis suffisamment de photons (10 à 100) en deux à six fois le temps de transfert (Tc) pour qu'on puisse localiser le lieu des photons non diffusés. Ceci implique, pour un scintillateur très rapide et lumineux du type LaBr3, que le procédé fonctionne pour une énergie du rayon gamma d'environ 50 KeV. Pour un scintillateur moins rapide et moins lumineux tel que BGO et NaI (Ti), la méthode devient applicable lorsque les photons à détecter ont une énergie supérieure à 1 MeV.

Dans le cas où un deuxième photon gamma impacte le scintillateur plus de 1000 picosecondes après le premier impact et pendant la durée de comptage Ti d'une première interaction (pile-up), si les disques de photons non diffusés ne sont pas confondus dans le plan des détecteurs, on pourra compter de manière indépendante les deux événements et donc mesurer correctement l'énergie des deux événements. Si les deux disques sont confondus, on pourra en analysant la répartition spatio-temporelle des photons détectés, déterminer que l'événement n'est pas correct et le rejeter.

Dans le cas où le photon gamma subit une déviation Compton avant d'être absorbé, on considérera les deux cas suivants :

- Le photon γ Compton reste dans le même cône de lumière (déviation inférieure à θc). Ce cas est le plus courant. Dans ce cas les photons non diffusés émis par l'interaction restent tous dans le même cône de lumière, mais leur répartition peut présenter une asymétrie i.e. un disque dense inclus dans un disque diffus. Dans ce cas la mesure de l'énergie se fait en comptant le nombre de photons dans le cône de lumière le plus vaste, comme si on n'avait pas d'effet Compton.

- Le photon γ Compton sort du cône de lumière. On obtient alors des événements distincts (deux cercles) simultanés dans le temps, contrairement au cas du pile-up. Deux options sont possibles selon la qualité des composants électroniques dont on dispose :

  ◦ Rejeter l'événement comme non valide ;

◦ Vérifier que après le temps d'intégration (Ti * Nombre de photons tâche 1 + Nombre de photons tâche 2 = nombre de photons permis pour l'énergie considérée). Dans ce cas la position correcte de l'événement reste dans le plus grand cercle. Ainsi, l'énergie de l'événement peut être obtenue en additionnant les comptages des photons dans les 2 cercles (ou tâches ou disques).

L'adjonction d'un photomultiplicateur par exemple de type SI - PMT et d'un composant microélectronique mixte rapide du type ASIC à un cristal scintillateur existant permettent d'améliorer ses performances. Ceci permet de réutiliser les cristaux dans le cas où la valeur de ceux-ci est importante vis-à-vis de la valeur du détecteur complet.

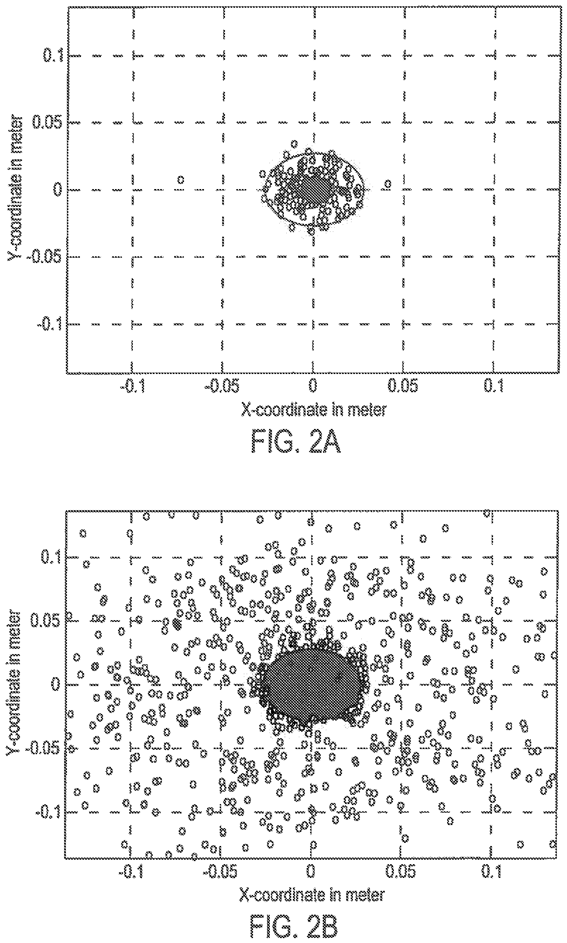

Les figures 2A et 2B correspondent à une simulation numérique de type Monte-Carlo dans le cas d'une plaque de LaBr3 :Ce d'épaisseur 30 mm, à face d'entrée 1 diffusante. (Tc = 200 ps).

Plus précisément, les figures 2A et 2B représentent la mesure d'un rayonnement de 511 KeV dans le cas d'une interaction ayant lieu en (x,y, z, t) avec une profondeur d'interaction Z = 5 mm et différents temps après l'interaction initiale.

Exemple 1 : Soit une plaque de monocristal LaBr3 d'épaisseur 30 mm. La face d'entrée 1 est diffusante et recouverte d'un film blanc réfléchissant. Elle représente la position Z = 0. La face inférieure 5 est polie. Elle représente la position Z=30; et via un joint optique 4 d'indice ng = 1,4 un photo-détecteur segmenté 3 par exemple un Si-PMT est collé sur la face inférieure 5. Les informations sont lues par un composant micro-électronique du type ASIC mixte rapide (non représenté). Les données ci-dessous ont été adaptées (par simulation) à la géométrie et à la taille du scintillateur considéré. Ce composant micro-électronique ASIC mesure le temps d'arrivée du premier photon sur chaque pixel puis compte le nombre de photons pendant par exemple 700 ps entre le premier photon détecté (t1) et t1 + 700ps. Ensuite, il intègre le nombre de photons sur les seuls pixels qui ont été activés pendant les 700 ps suivant l'événement initial, pendant une durée permettant de récupérer plus de 50% des photons émis par le scintillateur dans cet angle solide, soit 60 ns environ dans le cas de LaBr3.

On mesure un rayonnement de 511 KeV dans le cas d'une interaction photo-électrique pure ayant eu lieu à X, Y, Z, T. Les images représentées par les figures 2A et 2B correspondent à Z= 5 mm pour différents temps de transfert Tc. Le cercle représente les limites du cône des photons non diffusés.

La meilleure définition du cercle est obtenue dans cette configuration pour Tc = 700 ps. (Figure 2A). Nous avons alors détecté environ 100 photons, dont 95% dans le cercle. Ceci permet de déterminer les coordonnées et le rayon du cercle avec les précisions suivantes en millimètres.

|  | $\hat{X}_0 - X_0^*$ | $\hat{Y}_0 - Y_0^*$ | $\hat{Z}_0 - Z_0^*$ | $\hat{T}_0 - T_0^*$ |
|---|---|---|---|---|
| **Z=5 mm** | **0.0042** | **0.01** | **2.8** | **10.3** |
| Z = 10mm | 0.0031 | 0.03 | 4 | 35.07 |
| Z = 15 mm | 0.017 | 0.002 | 6.3 | 52.47 |
| Z = 20 mm | 0.0142 | 0.02 | 9.3 | 64.72 |
| Z = 25 mm | 0.0009 | 0.01 | 12 | 75.95 |

Une fois la position et le diamètre du disque déterminés, on compte le nombre de photons uniquement à l'intérieur du disque, pendant une durée de 60 ns. On obtient ainsi environ 7000 photons, ce qui permet une bonne statistique sur la résolution en énergie. On obtient suivant ce procédé une résolution en énergie inférieure à 3% dans cette configuration pour LaBr3, contre 5 à 6% par une méthode classique (Spect). Par ailleurs la précision de l'estimation en énergie pour chaque photon détecté est plus élevée, ce qui permet d'améliorer le gating en énergie du détecteur.

Le système selon l'invention peut s'adapter à différentes énergies de rayons gamma (de 50 KeV à plusieurs MeV), ainsi qu'à différentes géométries de cristal scintillateur (cylindres, plaques, barreaux, pixels...). Dans ces différentes situations, on fera varier le temps d'intégration Ti de manière à ce que Ti = 2 à 6 temps de transfert (Tc). Le temps de transfert Tc est le temps caractéristique de propagation de la lumière dans un scintillateur d'indice n et d'épaisseur H. Tc = H / (c/n).

L'invention utilise le fait qu'il existe des scintillateurs très rapides adaptés à l'application SPECT et des électroniques très rapides pour les lire (par exemple Si-PMT et circuit micro-électroniques dédiés de type ASIC), voir l'article des auteurs Pani, R., Vittorini, F., Pellegrini, R., Bennati, P., Cinti, M. N., Mattioli, M., et De Notaristefani, F. intitulé « High spatial and energy resolution gamma imaging based on LaBr3 (Ce) continuous crystals » publié en octobre 2008 dans la revue Nuclear Science Symposium Conférence Record, 2008. NSS'08. IEEE (pp. 1763-1771). Cet article montre des caractéristiques très prometteuses du cristal LaBr3:Ce comme imageur de rayons gamma. En particulier les excellentes valeurs de résolution d'énergie (6% à 140 KeV et ~ 3% à 662 KeV) sont obtenues lorsque le cristal LaBr3:Ce est couplé à un PMT.

De manière générale, les premiers photons remplissent donc une sphère dont le diamètre croît au cours du temps à une vitesse v= c/n. L'image de cette sphère sur le plan des détecteurs est un cercle dont le diamètre croit jusqu'à atteindre un angle limite Thêta L. Ces photons UV se propagent à la vitesse de la lumière (c/n) dans le matériau avec n = 1.9, indice du milieu. Ensuite, on va faire la différence entre les photons directs et les photons diffusés.

Dans un scintillateur de type LaBr3 dont le temps de montée au pic de lumière est environ 800 ps on améliore la résolution en énergie du détecteur en comptant le nombre de photons non diffusés détectés pendant une durée donnée supérieure au rise time (temps de montée au pic de lumière) du scintillateur (800 ps pour LaBr3) sur un certain disque incluant la tâche (disque) des premiers triggers (par exemple un disque dont le diamètre est de deux fois le diamètre de la tâche).

De manière générale, dans un détecteur plan monolithique, la résolution en énergie est dégradée par rapport à l'optimum théorique. La résolution en énergie est en effet liée au nombre de photons détectés pour un événement d'énergie donnée. Dans un détecteur plan la plupart des photons détectés subissent de multiples diffusions depuis leur lieu d'émission. Lors de ces diffusions, un pourcentage variable de photons est perdu. La présente invention fournit une solution intéressante car en comptant uniquement les photons non diffusés issus du cône de lumière, on retrouve la proportionnalité : nombre de photons/énergie propre au scintillateur. Ainsi on obtient une résolution en énergie de l'ordre de 3% avec LaBr3 : Ce.

Le composant micro-électronique du système de l'invention concerne en outre un composant micro-électronique du type ASIC mixte pour la lecture d'un photo-détecteur du système de détection tel que décrit ci-dessus. Ledit composant micro-électronique mixte comprend une partie analogique pour mesurer un événement rapide ainsi qu'une partie digitale pour mesurer le temps d'arrivée des premiers photons (triggers), à compter le nombre de photons détectés pour chaque pixel. Ledit composant permet en plus d'intégrer le nombre de photons détectés pendant 2 à 3 fois le temps de décroissance du scintillateur.

Il est également avantageux pour reconstituer l'image du disque des photons non diffusés de connaître une estimation du nombre de photons qui ont frappé chaque segment du détecteur 3 pendant le temps d'intégration. Ceci peut être fait de manière rigoureuse en numérisant toutes les nano-secondes le signal de charge, mais cela demande une puissance de calcul très importante. Une méthode alternative avec une électronique plus simple est d'obtenir pour chaque segment du détecteur 3 un trigger (Tr) indiquant l'instant d'arrivée du premier photon sur ce segment. On ne considère pour la détermination du cercle des photons non diffusés que les trigger Tr-Tr0 < n * TC, avec n déterminé par la modélisation. Ainsi la probabilité de détection d'un photon au-delà du cercle soit inférieure à un seuil prédéfini (Par exemple Tc = 200 ps pour une plaque de LaBr3 de 30 mm d'épaisseur. N = 3,5 pour un seuil à 95%).

Afin d'améliorer la résolution en énergie des scintillateurs, le système selon la présente invention peut être utilisé dans des imageurs gamma du type SPEC ou PET.

Le système selon l'invention peut également être utilisé pour construire des spectromètres imageurs tels que caméra Compton.

De nombreuses combinaisons peuvent être envisagées sans sortir du cadre de l'invention défini par les revendications suivantes ; l'homme de métier choisira l'une ou l'autre en fonction des contraintes économiques, ergonomiques, dimensionnelles ou autres à respecter.

**Revendications**

1. Procédé d'amélioration de la résolution en énergie d'un détecteur de rayonnement gamma comprenant un scintillateur monolithique (2) et un photo-détecteur segmenté (3), lors d'un événement de scintillation **caractérisé par** les étapes suivantes:

   - détecter le temps d'arrivée des premiers photons sur chaque segment dudit photo-détecteur (3) ;
   - compter pendant une période $T_i$ dite « temps d'intégration » comprise entre 2 et 6 fois d'un temps de transfert (Tc), le nombre des premiers photons non diffusés détectés, et déterminer leur localisation ;
   - déterminer le diamètre et la position d'un disque à l'intérieur duquel est disposé des premiers photons non diffusés ;
   - déterminer la position (X, Y) d'un événement de scintillation à partir de la localisation desdits premiers photons non diffusés détectés ;
   - compter le nombre de premier photons non diffusés disposés à l'intérieur dudit disque pendant une durée $T_d$ dite « temps de comptage » supérieure à un temps de déclin ($\tau$) du scintillateur ;
   - définir l'énergie d'un photon gamma, ladite énergie étant proportionnelle au nombre de photons non diffusés comptés à l'intérieur du disque.

2. Procédé d'amélioration de la résolution en énergie d'un détecteur selon la revendication 1 dans lequel on compte les photons à l'intérieur du disque pendant une durée égale à environ 2 à 3 fois le temps de déclin ($\tau$) dudit scintillateur afin de réduire l'incertitude sur la mesure de l'énergie de chaque photon gamma.

3. Procédé d'amélioration de la résolution en énergie d'un détecteur selon l'une des revendications précédentes dans lequel on estime la position Z de l'interaction en fonction du diamètre du disque des photons non diffusés , ladite position Z étant la profondeur de ladite interaction.

4. Système de détection de rayonnement gamma pour la mise œuvre du procédé selon l'une des revendications 1 à 3 comprenant un cristal scintillateur (2) doté d' une face d'entrée (1) et d'une face de sortie (5) polie et couplée par un joint optique (4), à un photo-détecteur segmenté (3), ledit photo-détecteur étant lu par un composant micro-électronique **caractérisé en ce que** le système est apte à mesurer le temps d'arrivée des premiers photons pendant une durée d'environ 2 à 6 fois d'un temps de transfert (Tc), à mesurer le nombre et à déterminer la localisation desdits premiers photons, à déterminer le diamètre et la position d'un disque à l'intérieur duquel est disposé un ensemble de photons non diffusés, le diamètre maximum dudit disque étant proportionnel à l'épaisseur dudit cristal scintillateur , et **en ce qu'**il est apte à compter le nombre de photons détectés pendant une durée d'environ 2 à 3 fois d'un temps de déclin ($\tau$) dudit scintillateur pour chaque pixel afin de mesurer l'énergie d'un seul photon gamma avec une précision supérieure à deux fois la résolution théorique du cristal scintillateur pour une énergie donnée.

5. Système de détection selon la revendication 4 **caractérisé en ce que** le composant micro-électronique de lecture est soit intégré dans un photo-détecteur (3) de type Si-PM digital, soit sous forme d'un composant séparé de type ASIC.

6. Système de détection de rayonnement gamma selon l'une des revendications 4 ou 5 dans lequel le cristal scintillateur (2) présente des géométries sous forme de plaque, cylindre ou barreau.

7. Système de détection de rayonnement gamma selon les revendications 4 à 6 dans lequel le cristal scintillateur (2) est un halogénure de lanthane ou un silicate de lutétium pour un rayonnement d'énergie supérieure à 100 KeV.

8. Système de détection de rayonnement gamma selon l'une des revendications 4 à 7 dans lequel le cristal scintillateur (2) est d'un type quelconque lorsque les photons à détecter ont une énergie supérieure à 1MeV.

9. Système de détection selon la revendication 4 dans lequel ledit cristal scintillateur (2) est couplé sur la face d'entrée (1) et sur la face de sortie (5) à un photo-détecteur segmenté (3) afin d'augmenter la précision de la mesure de la résolution en énergie.

10. Système selon l'une des revendications 4 à 9, **caractérisé en ce qu'**il comporte au moins un cristal scintillateur sous forme de plaque monolithique dotée de faces latérales et d'une face d'entrée (1) pour mesurer la distribution de lumière dans une application PET, dans lequel lesdites faces latérales et la face d'entrée (1) sont d'abord traitées de manière à éviter une réflexion par saut d'indice puis recouvertes d'un absorbant noir, afin de supprimer la réflexion sur lesdites faces.

11. Système selon l'une des revendications 4 à 9, **caractérisé en ce qu'**il comporte au moins un cristal scintillateur sous forme de plaque monolithique dotée de faces latérales et d'une face d'entrée (1) pour mesurer la distribution de lumière d'un événement de scintillation à 511 KeV, dans lequel lesdites faces latérales et la face d'entrée (1) sont recouvertes d'une résine d'indice n>1,7, ladite résine est chargée de particules absorbantes, afin de supprimer la réflexion sur lesdites faces.

12. Utilisation du système de détection de rayonnement gamma selon l'une des revendications 4 à 9 pour améliorer la résolution en énergie des scintillateurs dans des imageurs gamma du type SPECT ou PET.

**Patentansprüche**

1. Verfahren zur Verbesserung der Energieauflösung eines Gammastrahlungsdetektors, der einen monolithischen Szintillator (2) und einen segmentierten Fotodetektor (3) umfasst, während eines Szintillationsereignisses, durch folgende Schritte gekennzeichnet:

   - Erfassen der Ankunftszeit der ersten Photonen auf jedem Segment des Fotodetektors (3);

- Zählen während einer als "Integrationszeit" bezeichneten Periode Ti zwischen dem 2- und 6-fachen einer Übertragungszeit (Tc) der Anzahl der ersten erfassten nicht gestreuten Photonen und Bestimmen deren Lokalisation;

- Bestimmen des Durchmessers und der Position einer Scheibe, in der sich die ersten nicht gestreuten Photonen befinden;

- Bestimmen der Position (X, Y) eines Szintillationsereignisses auf der Basis der Lokalisation der ersten erfassten nicht gestreuten Photonen;

- Zählen der Anzahl der ersten nicht gestreuten Photonen während einer als "Zählzeit" bezeichneten Dauer Td, die größer ist als eine Abklingzeit ($\tau$) des Szintillators, die innerhalb der Scheibe angeordnet sind;

- Definieren der Energie eines Gammaphotons, wobei die Energie proportional zu der Anzahl der nicht gestreuten Photonen ist, die in der Scheibe gezählt werden.

2. Verfahren zur Verbesserung der Energieauflösung eines Detektors nach Anspruch 1, wobei die Photonen innerhalb der Scheibe während eines Zeitraums gezählt werden, der ungefähr dem 2- bis 3-fachen der Abklingzeit ($\tau$) des Szintillators entspricht, um die Unsicherheit der Messung der Energie jedes Gammaphotons zu verringern.

3. Verfahren zur Verbesserung der Energieauflösung eines Detektors nach einem der vorherigen Ansprüche, wobei die Position Z der Wechselwirkung abhängig von dem Durchmesser der Scheibe der nicht gestreuten Photonen geschätzt wird, wobei die Position Z die Tiefe der Wechselwirkung ist.

4. Gammastrahlungsdetektionssystem zur Ausführung des Verfahrens nach einem der Ansprüche 1 bis 3 mit einem Szintillatorkristall (2), der mit einer Eingangsfläche (1) und einer Ausgangsfläche (5) versehen ist, die poliert und durch eine optische Dichtung (4) mit einem segmentierten Fotodetektor (3) gekoppelt ist, wobei der Fotodetektor von einer mikroelektronischen Komponente gelesen wird, **dadurch gekennzeichnet, dass** das System dazu geeignet ist, die Ankunftszeit der ersten Photonen während eines Zeitraums von ungefähr dem 2- bis 6-fachen einer Übertragungszeit (Tc) zu messen, die Anzahl der ersten Photonen zu messen und die Lokalisation der ersten Photonen zu bestimmen, den Durchmesser und die Position einer Scheibe zu bestimmen, in der ein Satz nicht gestreuter Photonen angeordnet ist, wobei der maximale Durchmesser der Scheibe proportional zu der Dicke des Szintillatorkristalls ist, und dass es dazu geeignet ist, die Anzahl der Photonen zu zählen, die während eines Zeitraums von ungefähr dem 2- bis 3-fachen einer Abklingzeit ($\tau$) des Szintillators für jedes Pixel erfasst wurden, um die Energie eines einzelnen Gammaphotons mit einer Genauigkeit zu messen, die größer ist als die doppelte theoretische Auflösung des Szintillatorkristalls für eine gegebene Energie.

5. Detektionssystem nach Anspruch 4, **dadurch gekennzeichnet, dass** die mikroelektronische Lesekomponente entweder in einen Fotodetektor (3) vom digitalen Si-PM-Typ integriert ist oder als separate Komponente vom ASIC-Typ ist.

6. Gammastrahlungsdetektionssystem nach einem der Ansprüche 4 oder 5, wobei der Szintillatorkristall (2) Geometrien in Form einer Platte, eines Zylinders oder einer Stange aufweist.

7. Gammastrahlungsdetektionssystem nach den Ansprüche 4 bis 6, wobei der Szintillatorkristall (2) ein Lanthanidhalogenid oder ein Lutetiumsilikat für eine Energiestrahlung von mehr als 100 KeV ist.

8. Gammastrahlungsdetektionssystem nach einem der Ansprüche 4 bis 7, wobei der Szintillatorkristall (2) von einer unbestimmten Art ist, wenn die zu erfassenden Photonen eine Energie von mehr als 1 MeV haben.

9. Detektionssystem nach Anspruch 4, wobei der Szintillatorkristall (2) an der Eingangsfläche (1) und an der Ausgangsfläche (5) mit einem segmentierten Fotodetektor (3) gekoppelt ist, um die Genauigkeit der Messung der Energieauflösung zu erhöhen.

10. System nach einem der Ansprüche 4 bis 9, **dadurch gekennzeichnet, dass** es mindestens einen Szintillatorkristall in Form einer monolithischen Platte umfasst, die mit Seitenflächen und einer Eingangsfläche (1) versehen ist, um die Lichtverteilung in einer PET-Anwendung zu messen, wobei die Seitenflächen und die Eingangsfläche (1) zuerst behandelt werden, um eine Reflexion durch Indexsprung zu vermeiden, und dann mit einem schwarzen Absorptionsmittel bedeckt werden, um die Reflexion auf die Fläche zu unterdrücken.

11. System nach einem der Ansprüche 4 bis 9, **dadurch gekennzeichnet, dass** es mindestens einen Szintillatorkristall in Form einer monolithischen Platte umfasst, die mit Seitenflächen und einer Eingangsfläche (1) versehen ist, um die Lichtverteilung eines Szintillationsereignisses mit 511 KeV zu messen, wobei die Seitenflächen und die Eingangsfläche (1) mit einem Harz mit einem Index n>1,7 bedeckt sind, wobei das Harz absorbierende Partikel umfasst, um die Reflexion auf die Fläche zu unterdrücken.

**12.** Verwenden des Gammastrahlungsdetektionssystems nach einem der Ansprüche 4 bis 9 zur Verbesserung der Energieauflösung der Szintillatoren in Gammabildgebern vom Typ SPECT oder PET.

**Claims**

**1.** Method for improving the energy resolution of a gamma radiation detector comprising a monolithic scintillator (2) and a segmented photodetector (3), during a scintillation event, **characterised by** the following steps:

- detecting the arrival time of the first photons on each segment of said photodetector (3);
- counting, during a period $T_i$ called the "integration time" of between 2 and 6 times a transfer time (Tc), the number of the first undiffused photons detected, and determining their location;
- determining the diameter and position of a disc inside which are disposed first undiffused photons;
- determining the position (X, Y) of a scintillation event on the basis of the location of said first undiffused photons detected;
- counting the number of first undiffused photons disposed in the interior of said disc during a period $T_d$ called the "counting time" which is greater than a decay time ($\tau$) of the scintillator;
- defining the energy of a gamma photon, said energy being proportional to the number of undiffused photons counted in the interior of the disc.

**2.** Method for improving the energy resolution of a detector according to claim 1 in which the photons in the interior of the disc are counted during a period equal to approximately 2 to 3 times the decay time ($\tau$) of said scintillator in order to reduce uncertainty about the measurement of energy of each gamma photon.

**3.** Method for improving the energy resolution of a detector according to one of the preceding claims in which the position Z of the interaction is estimated as a function of the diameter of the disc of undiffused photons, said position Z being the depth of said interaction.

**4.** System for the detection of gamma radiation for carrying out the method according to one of claims 1 to 3 comprising a scintillator crystal (2) provided with an input face (1) and an output face (5) polished and coupled by an optical joint (4), to a segmented photodetector (3), said photodetector being read by a microelectronic component, **characterised in that** the system is capable of measuring the arrival time of the first photons during a period of approximately 2 to 6 times a transfer time (Tc), measuring the number and determining the location of said first photons, determining the diameter and position of a disc in the interior of which is disposed a group of undiffused photons, the maximum diameter of said disc being proportional to the thickness of said scintillator crystal, and **in that** it is capable of counting the number of photons detected during a period of approximately 2 to 3 times a decay time ($\tau$) of said scintillator for each pixel in order to measure the energy of a single gamma photon with a precision greater than twice the theoretical resolution of the scintillator crystal for a given energy.

**5.** Detection system according to claim 4, **characterised in that** the microelectronic reading component is either integrated in a photodetector (3) of the Si-PM digital type, or in the form of a separate component of the ASIC type.

**6.** Gamma radiation detection system according to one of claims 4 or 5 in which the scintillator crystal (2) has geometries in the form of a plate, cylinder or bar.

**7.** Gamma radiation detection system according to claims 4 to 6 in which the scintillator crystal (2) is a lanthanum halide or a lutetium silicate for an energy radiation greater than 100 KeV.

**8.** Gamma radiation detection system according to one of claims 4 to 7 in which the scintillator crystal (2) is of any type when the photons to be detected have an energy greater than 1 MeV.

**9.** Detection system according to claim 4 in which said scintillator crystal (2) is coupled on the input face (1) and on the output face (5) to a segmented photodetector (3) in order to increase the precision of measurement of the energy resolution.

**10.** System according to one of claims 4 to 9, **characterised in that** it comprises at least one scintillator crystal in the form of a monolithic plate provided with side faces and an input face (1) for measuring the distribution of light in a PET application, in which said side faces and the input face (1) are first treated so as to avoid reflection by step index, then covered with a black absorbent, in order to suppress reflection on said faces.

**11.** System according to one of claims 4 to 9, **characterised in that** it comprises at least one scintillator crystal in the form of a monolithic plate provided with side faces and an input face (1) for measuring the distribution of light of a scintillation event at 511 KeV, in which said side faces and the input face (1) are covered with a resin having an index n>1.7, and said resin is charged with absorbent particles, in order to suppress reflection on said faces.

**12.** Use of the gamma radiation detection system according to one of claims 4 to 9 to improve the energy resolution of scintillators in gamma imagers of the SPECT or PET type.

FIG. 1

EP 3 143 429 B1

FIG. 2A

FIG. 2B

## RÉFÉRENCES CITÉES DANS LA DESCRIPTION

**Documents brevets cités dans la description**

- CA 2740456
- FR 2013052672 W
- EP 4305365 A

**Littérature non-brevet citée dans la description**

- High spatial and energy resolution gamma imaging based on LaBr3 (Ce) continuous crystals. **PANI, R. ; VITTORINI, F. ; PELLEGRINI, R. ; BENNATI, P. ; CINTI, M. N. ; MATTIOLI, M. ; DE NOTARISTEFANI, F.** la revue Nuclear Science Symposium Conférence Record, 2008. NSS'08. IEEE, Octobre 2008, 1763-1771